# EUROPEAN PATENT SPECIFICATION

(11) **EP 0 686 105 B1**
(45) Date of publication and mention of the grant of the patent: **20.05.1998**
(21) Application number: 94903899.6
(22) Date of filing: 30.12.1993
(51) Int. Cl.: B60S 5/02

(54) **FUEL STATION AND METHOD FOR ASSEMBLING OF THE SAME**
TANKSTELLE UND VERFAHREN ZU DEREN ZUSAMMENBAU
STATION DE DISTRIBUTION DE CARBURANT ET PROCEDE D'INSTALLATION

(30) Priority: 05.03.1993 FI 930982
(43) Date of publication of application: 13.12.1995
(73) Proprietor: OY U-CONT LTD, 79600 Joroinen (FI)
(72) Inventor: SISTONEN, Jari, (FI)
(74) Representative: Mentzel, Norbert, Dipl.-Phys.
(86) International application number: PCT/FI93/00570
(87) International publication number: WO 94/20341

(56) References cited:
- WO-A-92/17666
- GB-A- 2 209 183
- SE-B- 383 707
- US-A- 2 182 126
- US-A- 2 959 826
- US-A- 4 988 020
- US-A- 5 114 046

## Description

The present invention relates to a fuel dispensing station, comprising at least one fuel tank or some other neccessary tanks, at least one fuel pump for dispensing fuel contained in said tank and a pump roofing which are assembled together as an integral unit with a common foundation whereby the frame structure of the pump roofing is adapted to be supported directly on the foundation thereby directing the bearing loads past the fuel tank.

Such dispensing station is known from the SE-B-383 707. In this case the foundation of the fuel station is arranged above ground. Like on a platform fuel pumps, the tank or some other neccessary tanks and the frame structure for the pump roofing are mounted on top of this foundation. This arrangement with the upground tank and the fuel pump in front of it exhibits some problems. Because of the limited expense on the foundation, the fuel pumps can be attended by the customers only from one side. Further more two other aspects must be taken into consideration. The first is the security aspect. There is the risk of explosion, when a vehicle or something like that crash into the fuel station. Secondly the seasonal fluctuation of the temperature must be considered because the expansion of the fuel in the tank differs significant with the temperature. Further more for unauthorized persons it is rather easy to get access to the upground fuel tanks.

The fuel station according WO 92/17 666 mounts the roof also on an upground construction. This means all the disadvantages occur in the same way like the fuel station in SE-A 383 707.

To eliminate this drawbags it would be better to modify the construction of the fuel station in that way, that the tank is underground. Such an arrangement of a dispensing station is discribed in the US-A 29 59 826 with an underground fuel tank covered by a pump island. Fuel pumps and the frame structure of the pump roofing are fastened with the pump island. In that case the tank is subjected to external stresses which gradually crack the tank unless use is made of specially reinforced and hence expensive specially tanks. Such special tanks are specifically dimensioned in accordance with the external loads. This type of fuel station is erected without a special foundation in the underground, the pump island works as a stabilising platform for the frame of the pump roofing and fuel pumps above ground and for the fuel tank underground.

In order to eliminate these drawbacks the in invention suggests that the fuel tank is completely underground and the fuel dipensing station is provided with a pump island which is arranged above that fuel tank at a substantially ground level and which is secured to the frame structure of that pump roofing.

Due to this arrangement the contents of the underground tanks is no longer exposed to temperature changes, because the surrounding soil compensates seasonal temperature variations. Whereas on the ground floor there is much space for the vehicles to use the fuel pumps from both sides. The tanks are only accessable by fuel pipes within inspection wells so that the risk of unauthorized admittance is minimized.

The support frame is used for directing the major forces or loads past the tank to the foundation. Thus, the tank shall not be subjected to any substantial stresses caused by the external structures. In a solution of the invention, all major forces or loads are applied to the support frame and thereby directly to the foundation. The fuel tank is protected. This makes it possible to use a prefered standardized tank. At the installation site the readily erectable blocks are arranged above each other on the common foundation, whereby the frame structure connected with the foundation underground merges into the pump roofing by supporting the pump islands.

Some preferred further developments of the invention are disclosed in the subclaims.

The invention will now be described in more detail with reference made to the accompanying drawing, in which:
- Fig. 1: is a partially sectional side view of a dispensing station of the invention.
- Fig. 2: is a partially sectional end view of a dispensing station of the invention.

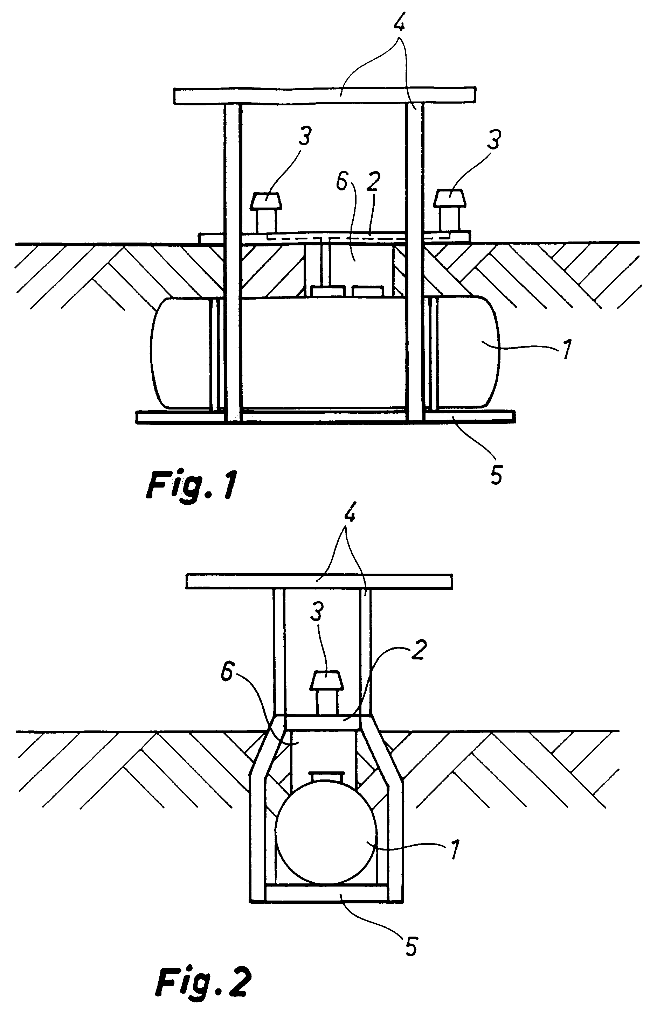

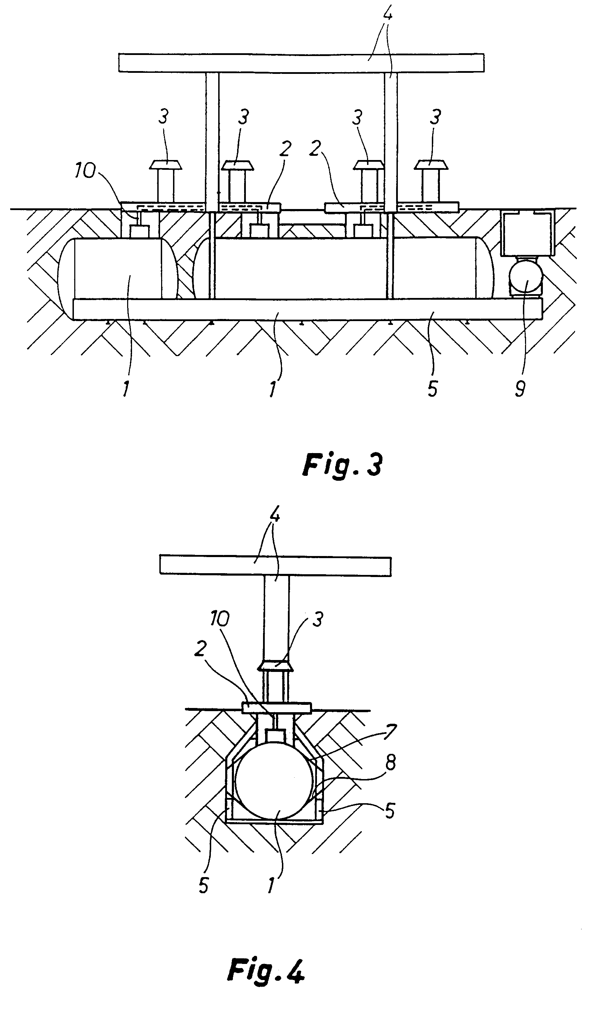

A fuel dispensing station, an example of which is schematically shown in figs. 1 and 2 and installed in position and buried partially underground, includes a fully underground fuel tank 1, a pump island 2, laid substantially on ground level or slightly thereabove and provided with two fuel pumps 3, as well as a pump roofing 4 serving as a rain shelter for refuellers. In addition to the fuel tank 1, the number of which may be more than one, other necessary tanks may be included as well.

In the example shown in the drawing, a foundation 5 comprises a reinforced concrete slab, which is laid or cast in a desired depth as required by the surrounding soil. All elements included in a dispensing station of the invention are directly or indirectly supported on the foundation 5, whereby the fuel tank 1, pump island 2 and pump roofing 4 are connected together as an integral unit provided with this common foundation 5.

The fuel tank 1 and frame structures for the pump roofing 4 are supported on top of the foundation 5 as known in the art. The pump island 2 is in turn secured to the frame structures of pump roofing 4 and further on top of the fuel tank 1 through the intermediary of the wall structure of an inspection well 6 for tank 1, the pump island 2 being provided with an openable gate for the access into the inspection well 6.

The mass of all structures included in a dispensing station are thus utilized for anchoring the tank 1 against the buoyancy caused by ground-water.

The dispensing station is adapted to be carried to an installation site as readily erectable blocks. All operations requiring precision and high skill are performed at the factory and, thus, the construction site only involves earthmoving operations and assembling the blocks together as well as necessary simple coupling operations.

In view of minimizing the costs the frame structures of pump roofing 4 and pump island 2, preferably consisting of tubular girders, are used as fuel, gas and drain pipes.

Foundation 5 can be provided in several ways. In addition to a slab transported to the site or a slab to be cast on site, which mould with its necessary reinforcements may be included in the frame structure of a station, the foundation can be produced e.g. in a manner such that the outer wall of the fuel tank provides an anchorage, foundation and runoff basin.

## Claims

1. A fuel dispensing station comprising at least one fuel tank (1), and at least one fuel pump (3) for dispensing the fuel contained in said tank and a pump roofing (4) which are assembled together as an integral unit with a common foundation whereby a frame structure of the pump roofing (4) is adapted to be supported directly on the foundation (5) thereby directing the bearing loads past the fuel tank (1),
**characterized in that:**
said fuel tank (1) is a fully underground tank and fuel despensing station is provided with a pump island (2), and the pump (2) island is arranged above that fuel tank (1) at a substantially ground level and is secured to the frame structure of said pump roofing (4).

2. A dispensing station as set forth in claim one, characterized in that an inspection well (6) included in the fuel tank (1) is fixedly connected to the pump island (2).

3. A dispensing station as set forth claim one or two, characterized in that the frame structure of the pump roofing (4) and pump island (2) is used as fuel, gas and sewer pipes.

4. A dispensing station as set forth in any of claims 1 - 3 characterized in that the outer wall of the fuel tank (1) provides an anchorage, foundation and runoff basin.

5. A dispensing station as set forth in claim 4, characterized in that the foundation (5) consists of reinforced beams, preferably two beams, which are fitted along the sides of the fuel tank (1).

6. A dispending station as set forth in any of claims 1 - 5, characterized in that fuel pipes (10) are adapted to extend within the inspection well (6) and inside the pump island (2) for providing a double walled design for the fuel pipes (10).

7. A method for erecting a fuel dispensing station, said station comprising at least one fuel tank (1), at least one fuel pump (3) for dispensing the fuel contained in said tank and pump roofing (4) which are assembled together as an integral unit with a common foundation whereby the frame structure of the pump roofing (4) is adapted to be supported directly on the foundation (5) thereby directing the bearing loads past the fuel tank (1),
**characterized in that:**
the despensing station is carried out to installation site as readily erectable blocks, which are connected together at the installation site beginning with a common foundation at the bottom, fuel tank, pump island and fuel pump arranged above, provided with a pump roofing on the top adapted to be supported by the foundation.

## Patentansprüche

1. Eine aus mindestens einem Kraftstofftank (1), mindestens einer Zapfsäule (3) zur Abgabe des in vorgenanntem Tank enthaltenen Kraftstoffs und einer Zapfsäulenüberdachung (4), die mit einem gemeinsamen Fundament zu einer integrierten Einheit zusammengebaut sind, wobei eine tragende Struktur der Zapfsäulenüberdachung (4) so ausgeführt ist, daß sie sich direkt auf dem Fundament (5) abstützt und dadurch die Auflagerlasten am Kraftstofftank (1) vorbeigeleitet werden, bestehende Tankstelle,
**dadurch gekennzeichnet,**
daß der vorgenannte Kraftstofftank (1) vollständig unterirdisch angeordnet ist, die Tankstelle eine Zapfsäuleninsel (2) aufweist und die Zapfsäuleninsel (2) oberhalb jenes Kraftstofftanks (1) im Wesentlichen auf Bodenhöhe angeordnet und mit der tragenden Struktur der vorgenannten Zapfsäulenüberdachung (4) sicher verbunden ist.

2. Eine Tankstelle gemäß Anspruch eins, dadurch gekennzeichnet, daß ein zum Kraftstofftank (1) gehörender Inspektionsschacht (6) fest mit der Zapfsäuleninsel (2) verbunden ist.

3. Eine Tankstelle gemäß Anspruch eins und zwei, dadurch gekennzeichnet, daß die tragende Struktur der Zapfsäulenüberdachung (4) und der Zapfsäuleninsel (2) als Kraftstoff-, Gas- und Abwasserleitung verwendet wird.

4. Eine Tankstelle gemäß jedes der Ansprüche 1 - 3, dadurch gekennzeichnet, daß die äußere Wandung des Kraftstofftanks (1) als Verankerung, Fundament und Auffangbecken dient.

5. Eine Tankstelle gemäß Anspruch 4, dadurch gekennzeichnet, daß das Fundament (5) aus entlang der Seiten des Kraftstofftanks (1) befestigten, bewehrten Trägern, vorzugsweise zwei Trägern, besteht.

6. Eine Tankstelle gemäß jedes der Ansprüche 1 - 5, dadurch gekennzeichnet, daß die Kraftstoffleitungen (10) derart ausgeführt sind, daß sie innerhalb des Inspektionsschachtes (6) und der Zapfsäuleninsel (2) verlaufen und dadurch eine doppelwandige Konstruktion für die Kraftstoffleitungen (10 ) bilden.

7. Ein Verfahren zum Bau einer Tankstelle, wobei die vorgenannte Tankstelle aus mindestens einem Kraftstofftank (1), mindestens einer Zapfsäule (3) zur Abgabe des in vorgenanntem Tank enthaltenen Kraftstoffs und einer Zapfsäulenüberdachung (4) besteht, die mit einem gemeinsamen Fundament zu einer integrierten Einheit zusammengebaut sind, wobei die tragende Struktur der Zapfsäulenüberdachung (4) so ausgeführt ist, daß sie sich direkt auf dem Fundament (5) abstützt und dadurch die Auflagerlasten am Kraftstofftank (1) vorbeigeleitet werden,
**dadurch gekennzeichnet,**
daß die Tankstelle in Form vorgefertigter Bauteile, die am Aufstellort, beginnend mit einem gemeinsamen Fundament an der Unterseite, gefolgt von dem darüber angeordneten Kraftstofftank sowie ebensolcher Zapfsäuleninsel und Zapfsäule, miteinander verbunden und oben mit einer Zapfsäulenüberdachung, die so ausgeführt ist, daß sie vom Fundament gestützt wird, versehen werden, zum Aufstellort transportiert wird.

## Revendications

1. Station de distribution de carburant composée d'au moins un réservoir de carburant (1), au moins une pompe à carburant (3) servant à débiter le carburant contenu dans le réservoir susmentionné et une toiture (4) pour pompe à essence, lesquels sont assemblés avec des fondations communes pour former une unité intégrée, une structure porteuse de la toiture (4) des pompes étant réalisée de telle manière qu'elle s'appuie directement sur les fondations (5) et que les charges d'appui passent le long du réservoir de carburant (1),
**caractérisée en ce que**
le réservoir de carburant (1) précédemment mentionné est disposé entièrement sous terre, la station de distribution présente un îlot pour pompe à carburant (2) et que cet îlot pour pompe (2) se trouve au-dessus du réservoir de carburant (1), essentiellement au niveau du sol, et qu'il est relié de manière sûre à la structure porteuse de la toiture (4), pour pompe, précédemment mentionnée.

2. Station de distribution de carburant selon la revendication 1, caractérisée en ce qu'un puîts d'inspection (6) appartenant au réservoir de carburant (1) est relié fermement à l'îlot pour pompe (2).

3. Station de distribution de carburant selon les revendications 1 et 2, caractérisée en ce que la structure porteuse de la toiture (4) pour pompe à essence et de l'îlot pour pompe (2) sert de conduite pour le carburant, le gaz et les eaux usées.

4. Station de distribution de carburant selon les revendications 1 à 3, caractérisée en ce que la paroi extérieure du réservoir de carburant (1) sert de moyen d'ancrage, de fondations et de bassin récupérateur.

5. Station de distribution de carburant selon la revendication 4, caractérisée en ce que les fondations (5) se composent de supports renforcés, de préférence de deux, fixés le long des côtés du réservoir de carburant (1).

6. Station de distribution de carburant selon chacune des revendications 1 à 5, caractérisée en ce que les conduites de carburant (10) sont réalisées de telle sorte qu'elles circulent à l'intérieur du puîts d'inspection (6) et de l'îlot pour pompe (2) et qu'elles forment ainsi une construction double paroi pour conduites de carburant (10).

7. Procédé d'installation d'une station de distribution de carburant, la station susmentionnée se composant d'au moins un réservoir de carburant (1), au moins une pompe (3) servant à débiter le carburant contenu dans le réservoir susmentionné et d'une toiture pour pompe (4), lesquels sont assemblés avec des fondations communes pour former une unité intégrée, la structure porteuse de la toiture pour pompe (4) étant réalisée de sorte à s'appuyer directement sur les fondations (5) et donc à faire passer les charges d'appui le long du réservoir de carburant (1),
**caractérisé en ce que**
la station de distribution de carburant est transportée sous forme de pièces préfabriquées jusque sur le lieu d'implantation, lesdites pièces sur ce lieu étant pour commencer dotées de fondations communes contre leur face inférieure puis du réservoir de carburant disposé au-dessus ainsi que de l'îlot pour pompe également au-dessus, et de la pompe, reliées entre elles et dotées en haut d'une toiture pour pompe réalisée de telle sorte qu'elle soit soutenue par les fondations.
